# EUROPÄISCHE PATENTSCHRIFT

(11) **EP 0 548 967 B1**
(45) Veröffentlichungstag und Bekanntmachung des Hinweises auf die Patenterteilung: **21.10.1998**
(21) Anmeldenummer: 92121931.7
(22) Anmeldetag: 23.12.1992
(51) Int. Cl.: G07F 7/10, H04L 9/32

(54) **Verfahren zum Datenaustausch und Datenaustauschsystem mit Überprüfung der Echtheit der Vorrichtung**
process for exchanging data and data exchange system with system authenticity check
procédé et système d'échange de données avec contrôle de l'authenticité du système

(30) Priorität: 24.12.1991 DE 4142964
(43) Veröffentlichungstag der Anmeldung: 30.06.1993
(73) Patentinhaber: GAO Gesellschaft für Automation und Organisation mbH, 81307 München (DE)
(72) Erfinder: Meister, Gisela, Dr., W-8000 München 83 (DE); Pichlmaier, Albert, W-8000 München 40 (DE)
(74) Vertreter: Klunker . Schmitt-Nilson . Hirsch

(56) Entgegenhaltungen:
- EP-A- 0 029 894
- EP-A- 0 403 656
- EP-A- 0 414 314
- EP-A- 0 422 230
- GB-A- 2 227 111

## Beschreibung

Die Erfindung betrifft ein Verfahren zum Datenaustausch gemäß dem Oberbegriff des Anspruchs 1 und ein Datenaustauschsystem gemäß dem Oberbegriff des Anspruchs 9.

Aus der DE-PS 26 21 269 ist ein Datenaustauschsystem mit Datenträger und Vorrichtung bekannt, bei dem in dem Datenträger ein Datenspeicher vorgesehen ist. In diesem ist ein persönliches Merkmal, wie z.B. eine persönliche Identifizierungsnummer (PIN) des rechtmäßigen Benutzers zu Vergleichszwecken gespeichert.

Bevor mit dem Datenträger eine Transaktion im Datenaustauschsystem vorgenommen werden kann, muß der Benutzer des Datenträgers über die Tastatur der Vorrichtung eine persönliche Identifizierungsnummer eingeben. Diese wird in den Datenträger übertragen und dort von einem Vergleicher auf ihre Identität mit der dem rechtmäßigen Benutzer zugeordneten Identifizierungsnummer geprüft. Im positiven Fall geht das Datenaustauschsystem davon aus, daß der rechtmäßige Besitzer des Datenträgers eine Transaktion vornehmen will und gibt eine Transaktionsfreigabe.

Wie vorstehend erläutert, spielt die PIN die wesentliche Rolle bei der Autorisierungsprüfung, denn jeder Dritte, der im Besitz des Datenträgers sowie der zugehörigen PIN ist, kann den Datenträger mißbräuchlich verwenden. Bei dem bekannten System wird die PIN eingegeben, ohne daß es dem Benutzer möglich ist, zu erkennen, ob er seinen Datenträger in eine manipulierte Vorrichtung eingibt und seine PIN mißbräuchlich verwendet wird.

Der vorliegenden Erfindung liegt die Aufgabe zugrunde, die Sicherheit des bekannten Datenaustauschsystems im Hinblick auf die Verarbeitung des persönlichen Merkmals zu verbessern.

Diese Aufgabe wird durch die im kennzeichnenden Teil des Anspruchs 1 bzw. Anspruchs 9 angegebenen Merkmale gelöst.

Vorteilhafte Ausgestaltungen der Erfindungen sind in den abhängigen Ansprüchen angegeben.

Das Wesentliche der Erfindung ist, daß dem Benutzer die Möglichkeit gegeben wird, vor der Preisgabe seines persönlichen Merkmals die Echtheit des Systems bzw. der Vorrichtung auf einfache Weise zu überprüfen.

In einer bevorzugten Ausführungsform der Erfindung ist das in dem Datenträger gespeicherte Datenwort ein einfach zu merkender Code, der nach einer Entschlüsselung durch eine echte Vorrichtung auf der Anzeige dieser Vorrichtung erscheint, wobei der Benutzer dann davon ausgehen kann, daß es sich um eine autorisierte Vorrichtung handelt. Denn nur diese ist in der Lage, das Codewort zu entschlüsseln, da nur eine autorisierte Vorrichtung über die notwendigen Entschlüsselungseinrichtungen verfügt.

In einer weiteren bevorzugten Ausführungsform ist vorgesehen, daß der Benutzer das Datenwort bestimmen und gegebenenfalls jederzeit, vorzugsweise nach korrekter PIN-Eingabe ändern kann.

In einer weiteren bevorzugten Ausführungsform wird die Überprüfung der Echtheit des Systems durch den Benutzer eingebunden in das in den meisten Fällen ohnehin notwendige Authentisierungsverfahren der Systemkomponenten. Eine Authentisierung der Systemkomponenten, Datenträger und Vorrichtung läuft im allgemeinen so ab, daß verschlüsselte Nachrichten zwischen den Komponenten ausgetauscht werden und in der jeweils anderen Systemkomponente zur Überprüfung der Echtheit der jeweils anderen Komponente verifiziert werden.

In einer weiteren bevorzugten Ausführungsform wird das Datenwort in die vom Datenträger zur Vorrichtung zu übertragende Nachricht eingebunden.

In einer anderen bevorzugten Ausführungsform wird ein Datenträger mit IC verwendet, das einen Speicher und eine Steuereinrichtung aufweist. Ein solcher Datenträger ist beispielsweise aus der DE-OS 27 38 113 bekannt.

Die Erfindung wird nachfolgend anhand der Zeichnungen näher erläutert. Es zeigen:
- **Fig. 1**: ein Datenaustauschsystem mit einer IC-Karte und einem Gerät;
- **Fig. 2**: einen Authentisierungsablauf zwischen Karte und Gerät mit der Möglichkeit der Überprüfung des Geräts durch den Kartenbenutzer; und
- **Fig. 3**: einen Authentisierungsablauf wie bei **Fig. 2,** bei dem Karte und Gerät unterschiedliche Schlüssel aufweisen.

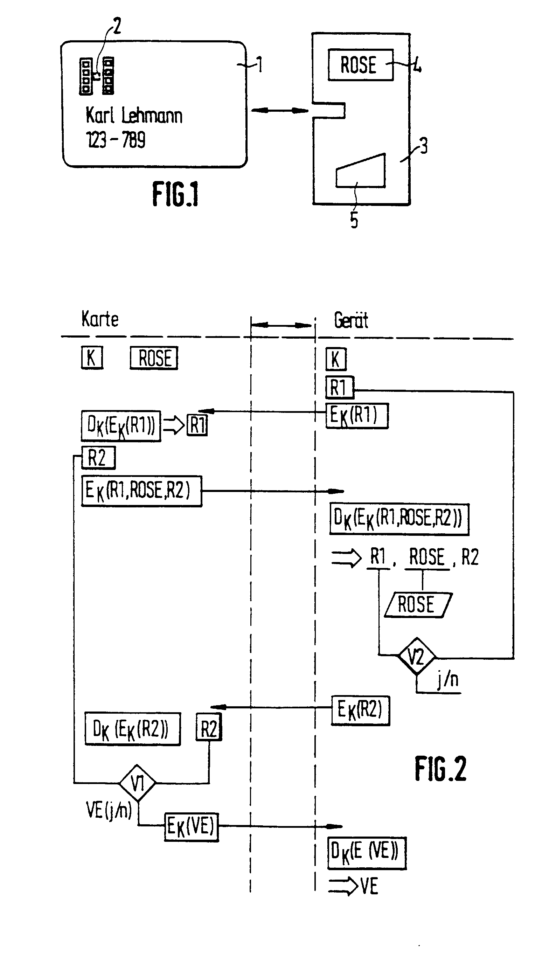

Das Datenaustauschsystem gemäß der **Fig. 1** besteht aus einer IC-Karte 1 sowie einem Gerät 3. Beide Systemkomponenten sind jeweils mit einer programmierbaren Steuereinrichtung versehen, die den in den nachfolgenden Figuren beschriebenen Funktionsablauf bewirkt. Ferner ist das Gerät 3 mit einer Anzeige 4 und einer Tastatur 5 versehen. Bei dem Gerät kann es sich um ein sogenanntes "off-line" betriebenes Terminal oder aber um ein "on-line"-Gerät handeln, das mit weiteren gleichrangigen Geräten einer Datenverarbeitungs-Zentrale verbunden ist.

In der **Fig. 2** ist der chronologische Datenaustausch zwischen der Karte 1 und dem Gerät 3 zur Durchführung einer gegenseitigen Authentisierung, d.h. einer gegenseitigen Echtheitsüberprüfung, dargestellt. Ferner ist in diesem Ablauf vorgesehen, es dem Benutzer der Karte 1 zu ermöglichen, eine Überprüfung des von ihm benutzten Geräts im Hinblick auf seine Autorisierung vorzunehmen.

In der Karte 1 bzw. deren integriertem Schaltkreis 2 sowie in dem Gerät 3 ist jeweils eine Ver-/Entschlüsselungseinrichtung vorgesehen. In der Karte und dem Gerät ist jeweils ein zum Betrieb der Ver-/Entschlüsselungseinrichtung erforderlicher Schlüssel K vorgesehen. Dieser Schlüssel K ist in der hier beschriebenen Ausführungsform sowohl in der Karte als auch im Gerät vorgesehen, d.h. beide Systemkomponenten verfügen über den gleichen Schlüssel. Außerdem weisen sowohl die Karte als auch das Gerät jeweils einen bekannten Zufallszahlen-Generator und jeweils einen Vergleicher V1 bzw. V2 auf. In der Karte ist ferner ein vom rechtmäßigen Benutzer gewähltes Datenwort im Speicher des integrierten Schaltkreises 2 abgespeichert.

Mit Beginn der Authentisierung generiert das Gerät eine Zufallszahl R1, die von der Verschlüsselungseinrichtung unter Verwendung des Schlüssels K in eine Nachricht verschlüsselt wird. Diese Nachricht wird über eine Kommunikationsverbindung an die Karte übermittelt und von der Entschlüsselungseinrichtung der Karte unter Verwendung des Schlüssels K entschlüsselt. Das Ergebnis dieser Entschlüsselung ist die vom Gerät 3 generierte Zufallszahl R1.

Der Zufallszahlen-Generator der Karte generiert daraufhin eine Zufallszahl R2, die gleichzeitig mit der von der Karte ermittelten geräteseitigen Zufallszahl R1 sowie dem vom rechtmäßigen Benutzer der Karte gewählten Datenwort ROSE von der Verschlüsselungseinrichtung der Karte unter Verwendung des Schlüssels K zu einer Nachricht verschlüsselt an das Gerät 3 übermittelt wird. Im Gerät wird diese von der Karte übermittelte Nachricht der Entschlüsselungseinrichtung des Geräts zugeführt und unter Verwendung des Schlüssels K entschlüsselt. Als Ergebnis der Entschlüsselung liefert die Entschlüsselungseinrichtung die geräteseitige Zufallszahl R1, das vom Benutzer gewählte Datenwort ROSE und die von dem IG der Karte generierte Zufallszahl R2. Die von dem Gerät entschlüsselte Zufallszahl R1, die aus der Nachricht der Karte stammt, wird dem Vergleicher V2 des Geräts zugeführt, der diese Zahl mit der Zahl R1 vergleicht, die von dem Gerät generiert und in verschlüsselter Form an die Karte gesandt wurde. Im positiven Falle geht das Gerät davon aus, daß es sich um eine zum Datenaustausch autorisierte Karte, d.h. eine echte Karte, handelt.

Nachfolgend wird der dechiffrierte Begriff ROSE der Karte auf der Anzeige 4 des Geräts 3 zur Anzeige gebracht. Dem Benutzer der Karte 1 an dem Gerät 3 ist damit die Möglichkeit eröffnet, zu überprüfen, ob die Anzeige 4 des Geräts 3 das von ihm gewählte Datenwort anzeigt, wodurch er sich versichern kann, daß es sich im positiven Fall um ein autorisiertes Gerät handelt, dem er im folgenden sein persönliches Merkmal, d.h. seine persönliche Identifizierungsnummer, preisgeben darf.

Damit auch kartenseitig die Echtheit des Geräts festgestellt werden kann, verschlüsselt die Verschlüsselungseinrichtung des Geräts die von dem Gerät entschlüsselte Zufallszahl R2 der Karte und sendet diese an die Karte. Die im IC-Schaltkreis 2 der Karte vorgesehene Entschlüsselungseinrichtung entschlüsselt diese Nachricht unter Verwendung des Schlüssels K was die ermittelte Zufallszahl R2 liefert. Diese ermittelte Zufallszahl R2 wird mit der von der Karte generierten Zufallszahl R2 auf den in der Karte befindlichen Vergleicher R1 gegeben, der ein Vergleichsergebnis VE ausgibt, das binär codiert einem JA oder NEIN entspricht. Das Ergebnis dieses Vergleichs kann durch die Verschlüsselungseinrichtung der Karte unter erneuter Beteiligung des Schlüssels K verschlüsselt und an das Gerät übertragen werden. Dessen Entschlüsselungseinrichtung entschlüsselt die von der Karte 1 erhaltene Nachricht. Das Vergleichsergebnis VE zeigt dem Gerät, ob die Karte den Authentisierungsprozeß ordnungsgemäß durchgeführt hat.

Nachfolgend wird der Benutzer, wenn beide Vergleiche positiv verlaufen sind, von dem Datenaustauschsystem in bekannter Art und Weise zur Eingabe seiner persönlichen Identifizierungsnummer, d.h. seiner PIN, aufgefordert. Stimmt die vom Benutzer der Karte 1 eingegebene PIN mit der in dem System gespeicherten PIN, die dem rechtmäßigen Besitzer der Karte zugeordnet worden ist, überein, so erzeugt das Datenaustauschsystem eine Transaktionsfreigabe, die es dem Benutzer der Karte ermöglicht, seine Transaktionen, z.B. eine Geldüberweisung, vorzunehmen. Ebenso ist es denkbar, daß mit der Erzeugung der Transaktionsfreigabe dem Benutzer der Karte der Zugang zu einem überwachten Bereich ermöglicht wird.

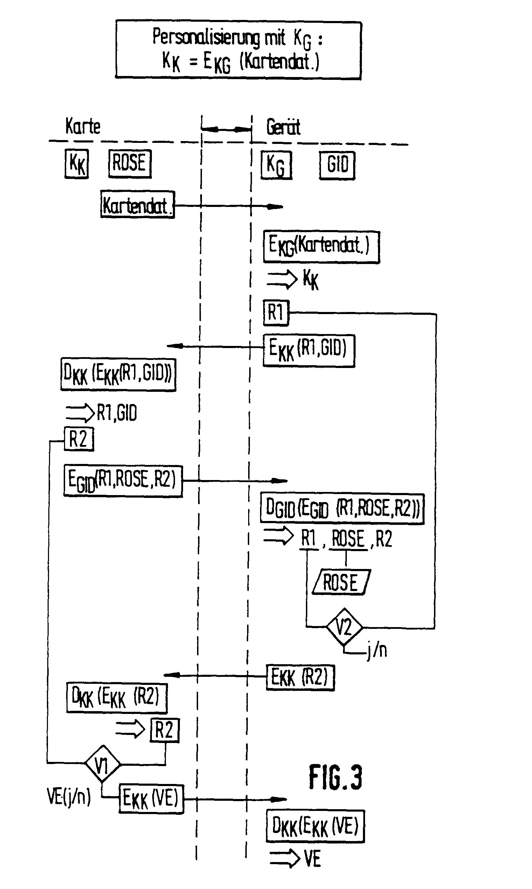

Der in **Fig. 3** dargestellte Authentisierungsablauf zwischen der Karte 1 und dem Gerät 3 unterscheidet sich von dem Ablauf bezüglich der **Fig. 2** dahingehend, daß Karte und Gerät unterschiedliche Schlüssel aufweisen und daß das Gerät ferner einen gerätespezifischen Parameter, insbesondere eine gesonderte Zufallszahl, erzeugt. Das Datenaustauschsystem gemäß der **Fig. 3** verfügt, ebenso wie das Datenaustauschsystem gemäß der **Fig. 2,** über jeweils eine karten- bzw. geräteseitige Ver-/Entschlüsselungseinrichtung, separate Zufallsgeneratoren sowie separate Vergleichseinrichtungen.

In der Karte 1 ist ein Schlüssel KK sowie das vom rechtmäßigen Besitzer der Karte gewählte Datenwort ROSE in dessen integriertem Halbleiterschaltkreis 2 gespeichert. Ferner sind in diesem integrierten Schaltkreis die die Karte kennzeichnenden Daten, wie Bankleitzahl, Kontonummer des Karteninhabers usw., abgespeichert. Der nachfolgend verwendete Begriff "Kartendaten" beinhaltet einen Teil oder alle letztgenannten, benutzerspezifischen Daten sowie den Schlüssel KK und das Datenwort ROSE.

In dem Gerät 3 ist ein Geräteschlüssel KG sowie ein gerätespezifischer Parameter GID bzw. ein separater Zufallsgenerator, der den Parameter GID generiert, vorgesehen. Der Schlüssel der Karte KK ist über die Beziehung KK=EKG (Kartendaten) mit dem Geräteschlüssel KG verknüpft.

Der Authentiisierungsablauf wird eingeleitet, indem die Karte die "Kartendaten" an das Gerät sendet. Im Gerät werden die Kartendaten mit dem Schlüssel KG verschlüsselt, womit das Gerät den Kartenschlüssel KK ermittelt. Der im Gerät befindliche Zufallsgenerator erzeugt daraufhin wie bei **Fig. 1** eine Zufallszahl R1, die mit einem gerätespezifischen Parameter GID unter Verwendung des Schlüssels KK verschlüsselt wird. Diese von der Verschlüsselungseinrichtung des Geräts verschlüsselte Nachricht wird an die Karte gesandt und entschlüsselt. Die Entschlüsselungseinrichtung der Karte liefert als Ergebnis die von dem Gerät 3 generierte Zufallszahl R1 sowie den gerätespezifischen Parameter GID.

Analog zu **Fig. 2** wird nun in der Karte 1 von deren Zufallsgenerator eine Zufallszahl R2 generiert, die mit der ermittelten Zufallszahl des Geräts R1 sowie dem von dem Benutzer gewählten Datenwort ROSE durch die Verschlüsselungseinrichtung der Karte unter Verwendung des gerätespezifischen Parameters GID als Schlüssel verschlüsselt wird. Diese Nachricht wird an das Gerät übermittelt und von der Entschlüsselungseinrichtung des Geräts wieder unter Verwendung des gerätespezifischen Parameters GID entschlüsselt. Als Ergebnis der Entschlüsselung liegen die ermittelte Zufallszahl R1 des Geräts, das Datenwort ROSE sowie die ermittelte Zufallszahl der Karte R2 vor. Der im Klartext vorliegende, vom rechtmäßigen Benutzer der Karte gewählte Begriff ROSE wird dem Benutzer der Karte in analoger Weise zu **Fig. 2** auf der Anzeige 4 des Geräts 3 angezeigt. Die vom Gerät generierte Zufallszahl R1 sowie die von dem Gerät ermittelte Zufallszahl R1 werden auf einen Vergleicher V2 in dem Gerät 3 gegeben. Im positiven Fall des Vergleichs geht das Gerät davon aus, daß es sich bei der verwendeten Karte um eine autorisierte Karte handelt.

Zur Feststellung der Echtheit des Geräts 3 durch die Karte 1 wird die von dem Gerät 3 ermittelte Zufallszahl R2 unter Verwendung des Kartenschlüssels KK von der Verschlüsselungseinrichtung des Geräts verschlüsselt. Diese Nachricht wird von dem Gerät 3 an die Karte 1 gesandt und dort von der Entschlüsselungseinrichtung der Karte unter Verwendung des Kartenschlüssels KK entschlüsselt. Als Ergebnis liegt die ermittelte Zufallszahl R2 vor, die von dem Vergleicher V1 im IC-Schaltkreis 2 der Karte 1 mit der von der Karte generierten Zufallszahl R2 auf Identität verglichen wird. Das Vergleichsergebnis VE wird unter Verwendung des Schlüssels KK in zur **Fig. 2** analoger Form verarbeitet.

## Patentansprüche

1. Verfahren zum Austausch von Daten, bei dem die Berechtigung eines Benutzers durch die Überprüfung eines vom Benutzer eingegebenen persönlichen Merkmals festgestellt wird, wobei dem Benutzer ein Datenträger (1) zugeordnet ist, der mit einer Vorrichtung (3), die eine Anzeigeeinheit (4) enthält, kommuniziert, dadurch **gekennzeichnet,** daß die Daten des Datenträgers (1) ein nur dem Benutzer bekanntes Datenwort enthalten, das vor der Aufforderung zur Eingabe des persönlichen Merkmals zur Vorrichtung (3) in codierter Form übertragen und nach der Decodierung durch eine in der Vorrichtung (3) enthaltene und die Echtheit der Vorrichtung (3) kennzeichnende kryptographische Einheit dem Benutzer zum Vergleich angezeigt wird.

2. Verfahren nach Anspruch 1, dadurch **gekennzeichnet,** daß das Datenwort vom Benutzer bestimmbar und jederzeit änderbar ist.

3. Verfahren nach Anspruch 2, dadurch **gekennzeichnet,** daß das Datenwort ein einprägsamer, für den Benutzer leicht zu merkender Begriff ist.

4. Verfahren nach Anspruch 2, dadurch **gekennzeichnet,** daß eine Änderung des Datenwortes nur nach einem positiven Vergleich des eingegebenen persönlichen Merkmals mit einem im System gespeicherten Merkmal möglich ist.

5. Verfahren nach Anspruch 4, dadurch **gekennzeichnet**, daß die Übertragung und Verschlüsselung des Datenwortes vom Datenträger (1) zur Vorrichtung (3) in einen zwischen dem Datenträger (1) und der Vorrichtung (3) ablaufenden Authentisierungsprozeß einbezogen wird.

6. Verfahren nach Anspruch 5, **gekennzeichnet** durch einen Authentisierungsprozeß mit folgenden Schritten:
- von der Vorrichtung (3) wird eine erste Zufallszahl (R1) generiert, die verschlüsselt an den Datenträger (1) übertragen wird;
- im Datenträger (1) wird die empfangene Nachricht entschlüsselt und eine zweite Zufallszahl (R2) gebildet;
- im Datenträger (1) wird die erste Zufallszahl (R1), das Datenwort und die zweite Zufallszahl (R2) verschlüsselt;
- in der Vorrichtung (3) wird die empfangene Nachricht entschlüsselt, die entschlüsselte Zufallszahl mit der im Gerät erzeugten Zufallszahl verglichen und bei Übereinstimmung das entschlüsselte Datenwort auf einer Anzeigeeinheit (4) angezeigt;
- von der Vorrichtung (3) wird die verschlüsselte zweite Zufallszahl (R2) an die Karte gesendet;
- in der Karte wird die gesendete Nachricht entschlüsselt und die entschlüsselte zweite Zufallszahl wird mit der in der Karte erzeugten Zufallszahl verglichen und bei positivem Vergleich wird eine Rückmeldung an die Vorrichtung (3) gesendet;
- die Vorrichtung (3) fordert den Benutzer zur Eingabe des persönlichen Merkmals auf.

7. Verfahren nach Anspruch 5, dadurch **gekennzeichnet,** daß in die geräteseitige Verschlüsselung ein gerätespezifischer Parameter einbezogen wird.

8. Verfahren nach Anspruch 8, dadurch **gekennzeichnet,** daß der gerätespezifische Parameter eine Zufallszahl ist.

9. Datenaustauschsystem mit einem dem Benutzer zugeordneten Datenträger (1), einer mit dem Datenträger (1) kommunizierenden Vorrichtung (3) und einer Anzeigeeinheit (4), wobei die Berechtigung eines Benutzers durch die Überprüfung eines vom Benutzer eingegebenen persönlichen Merkmals feststellbar ist, dadurch **gekennzeichnet,** daß
- der Datenträger (1) zur Aufnahme eines nur dem Benutzer bekannten Datenwortes ausgeführt ist,
- Übertragungsmittel zur Übertragung des Datenwortes zur Vorrichtung (3) in codierter Form vor der Aufforderung zur Eingabe des persönlichen Merkmals vorgesehen sind,
- eine kryptographische Einheit in der Vorrichtung (3) enthalten ist, welche die Echtheit der Vorrichtung (3) kennzeichnet, indem sie das Datenwort decodiert, und
- die Anzeigeeinheit (4) zur Anzeige des decodierten Datenwortes ausgeführt ist.

10. Datenaustauschsystem nach Anspruch 9, dadurch **gekennzeichnet,** daß
- der Datenträger (1) eine Ausweiskarte, Kreditkarte oder Zugangskarte ist und einen integrierten Schaltkreis (2) aufweist, der eine Speicherund eine Steuereinrichtung enthält,
- der Speicher einen überschreibbaren Bereich zur Ablage des Datenwortes aufweist, und
- die Steuereinrichtung zur Codierung bzw. Verschlüsselung des Datenwortes ausgeführt ist.

11. Datenaustauschsystem nach Anspruch 10, dadurch **gekennzeichnet,** daß die Steuereinrichtung ein programmgesteuerter Mikroprozessor ist.

12. Datenaustauschsystem nach Anspruch 9, dadurch **gekennzeichnet,** daß die Vorrichtung (3) einen gerätespezifischen Parameter enthält, welcher in die Verschlüssselung einbezogen ist.

13. Datenaustauschsystem nach Anspruch 12, dadurch **gekennzeichnet,** daß der gerätespezifische Parameter eine Zufallszahl ist.

## Claims

1. A method for data exchange wherein the entitlement of a user is detected by the check of a personal feature entered by the user, the user having a data carrier (1) associated with him which communicates with an apparatus (3) containing a display unit (4), characterized in that the data of the data carrier (1) contain a data word known only to the user that, before he is asked to enter his personal feature, is transmitted to the apparatus (3) in an encoded form and displayed to the user for comparison after being decoded by a cryptographic unit contained in the apparatus (3) and identifying the authenticity of the apparatus (3).

2. The method of claim 1, characterized in that the data word can be determined and changed at any time by the user.

3. The method of claim 2, characterized in that the data word is a catchy word easily remembered by the user.

4. The method of claim 2, characterized in that the data word can only be changed after a posiitve comparison of the entered personal feature with a feature stored in the system.

5. The method of claim 4, characterized in that the transmission and encoding of the data word from the data carrier (1) to the apparatus (3) is included in an authentication process taking place between the data carrier (1) and the apparatus (3).

6. The method of claim 5, characterized by an authentication process having the following steps:
- the apparatus (3) generates a first random number (R1) that is transmitted in an encoded form to the data carrier (1);
- the data carrier (1) decodes the received message and forms a second random number (R2);
- the data carrier (1) encodes the first random number (R1), the data word and the second random number (R2);
- the apparatus (3) decodes the received message, compares the decoded random number with the random number produced in the device and, in case of agreement, displays the decoded data word on a display unit (4);
- the apparatus (3) sends the encoded second random number (R2) to the card;
- the card decodes the message sent, compares the decoded second random number with the random number produced in the card and, if comparison is positive, sends an acknowledgment to the apparatus (3);
- the apparatus (3) asks the user to enter his personal feature.

7. The method of claim 5, characterized in that a device-specific parameter is included in the encoding on the device side.

8. The method of claim 8, characterized in that the device-specific parameter is a random number.

9. A data exchange system comprising a data carrier (1) associated with the user, an apparatus (3) communicating with the data carrier (1), and a display unit (4), the entitlement of a user being detectable by the check of a personal feature entered by the user, characterized in that
- the data carrier (1) is designed to include a data word known only to the user,
- transmission means are provided for transmitting the data word to the apparatus (3) in an encoded form before the user is asked to enter his personal feature,
- a cryptographic unit is contained in the apparatus (3) for identifying the authenticity of the apparatus (3) by decoding the data word, and
- the display unit (4) is designed to display the decoded data word.

10. The data exchange system of claim 9, characterized in that the data carrier (1) is an identity card, credit card or access card and has an integrated circuit (2) containing memory and control means,
- the memory having an overwritable area for deposit of the data word, and
- the control means being designed to encode and decode the data word.

11. The data exchange system of claim 10, characterized in that the control means is a program-controlled microprocessor.

12. The data exchange system of claim 9, characterized in that the apparatus (3) contains a device-specific parameter which is included in the encoding.

13. The data exchange system of claim 12, characterized in that the device-specific parameter is a random number.

## Revendications

1. Procédé d'échange de données, dans lequel l'habilitation d'un utilisateur est décidée après l'examen d'une caractéristique personnelle donnée par l'utilisateur, ce dernier étant associé à un support de données (1) qui communiquent avec un dispositif (3) contenant une unité d'affichage (4), caractérisé en ce que les données du support de données (1) contiennent une donnée élémentaire connue uniquement de l'utilisateur, transmise sous forme codée avant l'invitation à fournir la caractéristique personnelle au dispositif (3), et qui, après le décodage, est indiquée à l'utilisateur pour comparaison, par une unité cryptographique contenue dans le dispositif (3) et caractérisant l'authenticité du dispositif (3).

2. Procédé selon la revendication 1, caractérisé en ce que la donnée élémentaire est susceptible d'être déterminée par l'utilisateur et d'être changée à chaque fois.

3. Procédé selon la revendication 2 caractérisé en ce que la donnée élémentaire est un concept apte à être imprimé et facile à remarquer par l'utilisateur.

4. Procédé selon la revendication 2, caractérisé en ce qu'une modification de la donnée élémentaire n'est possible qu'après une comparaison positive de la caractéristique personnelle fournie avec une caractéristique stockée ou mise en mémoire dans le système.

5. Procédé selon la revendication 4, caractérisé en ce que la transmission et le codage de la donnée élémentaire du support de données (1) au dispositif (3) sont réalisés au cours d'un processus d'authentification se déroulant entre le support de données (1) et le dispositif (3).

6. Procédé selon la revendication 5, caractérisé par un processus d'authentification présentant les étapes suivantes consistant :
- faire générer par le dispositif (3) un premier nombre aléatoire (R1), qui est transmis sous forme codée au support de données (1) ;
- à coder dans le support de données (1) l'information reçue et à former un deuxième nombre aléatoire (R2) ;
- à coder dans le support de données (1) le premier nombre aléatoire (R1), la donnée élémentaire et le deuxième nombre aléatoire (R2);
- à coder dans le dispositif (3) l'information reçue, à comparer le nombre aléatoire codé avec le nombre aléatoire créé dans l'appareil et, en cas de correspondance. à indiquer la donnée élémentaire codée sur une unité d'affichage (4) ;
- à faire expédier par le dispositif (3) le deuxième nombre aléatoire codé (R2) à la carte ;
- à décoder dans la carte l'information expédiée et à comparer le deuxième nombre aléatoire décodé avec le nombre aléatoire créé dans la carte et, en cas de comparaison positive, à expédier une information en retour au dispositif (3) ;
- à faire demander par le dispositif (3) à l'utilisateur qu'il fournisse en entrée la caractéristique personnelle.

7. Procédé selon la revendication 5, caractérisé en ce que, dans le codage, du côté de l'appareil, est introduit un paramètre spécifique à l'appareil.

8. Procédé selon la revendication 8, caractérisé en ce que le paramètre spécifique à l'appareil est un nombre aléatoire.

9. Système d'échange de données comprenant un support de données (1) associé à l'utilisateur, un dispositif (3) communiquant avec le support de données (1) et une unité d'affichage (4), dans lequel système, l'habilitation d'un utilisateur est susceptible d'être réalisée par l'examen d'une donnée personnelle fournie par l'utilisateur, caractérisé en ce que :
- le support de données (1) est équipé pour recevoir une donnée élémentaire connue uniquement de l'utilisateur,
- des moyens de transmission sont prévus pour transmettre la donnée élémentaire au dispositif (3) sous forme codée avant l'invitation à fournir la caractéristique personnelle,
- et contenue dans le disposition (3) une unité cryptographique qui caractérise l'authenticité du dispositif (3) en décodant la donnée élémentaire, et
- l'unité d'affichage (4) est équipée pour afficher la donnée élémentaire décodée.

10. Système d'échange de données selon la revendication 9, caractérisé en ce que
- le support de donnée (1) est une carte d'identité, une carte de crédit ou une carte d'accès et comporte un circuit intégré (2), qui contient un stockage ou une mémoire et un organe de commande,
- la mémoire comporte une zone susceptible d'être recouverte de données pour recevoir la donnée élémentaire, et
- l'organe de commande est équipé pour le codage ou le chiffrage de la donnée élémentaire.

11. Système d'échange de données selon la revendication 10, caractérisé en ce que l'organe de commande est un microprocesseur commandé par programme(s).

12. Système d'échange de données selon la revendication 9, caractérisé en ce que le dispositif (3) contient un paramètre spécifique à l'appareil, et qui est introduit au cours du codage.

13. Système d'échange de données selon la revendication 12, caractérisé en ce que le paramètre spécifique est un nombre aléatoire.
